# EUROPÄISCHE PATENTSCHRIFT

(11) **EP 1 780 449 B1**
(45) Veröffentlichungstag und Bekanntmachung des Hinweises auf die Patenterteilung: **15.12.2010**
(21) Anmeldenummer: 06021920.1
(22) Anmeldetag: 19.10.2006
(51) Int. Cl.: B08B 3/02, A47L 15/24, F16J 15/16

(54) **Industriewaschmaschine mit einer Dichtungseinrichtung zum Abdichten eines Tores gegenüber einem Zug- oder Treiborgan**
Industrial washing machine with a sealing arrangement to seal the door towards the pulling or actuating organ
Machine à laver industrielle avec dispositif d'étanchéité entre la porte et l'organe d'actionnement ou de traction

(30) Priorität: 27.10.2005 DE 102005051385
(43) Veröffentlichungstag der Anmeldung: 02.05.2007
(73) Patentinhaber: EISENMANN Anlagenbau GmbH & Co. KG, 71032 Böblingen (DE)
(72) Erfinder: Wilczek, Klaus, 71139 Ehningen (DE); Weber, Gerhard, 72124 Pliezhausen (DE)
(74) Vertreter: Ostertag, Ulrich

(56) Entgegenhaltungen:
- DE-A1- 4 244 693
- DE-C1- 19 739 326

## Beschreibung

Die Erfindung betrifft eine Industriewaschmaschine mit wenigstens einer Waschmaschinenkammer, wenigstens zwei Toren zum Abschluss der Waschmaschinenkammer, wenigstens einem langgestreckten Zug- oder Treiborgan zum taktweise Fördern wenigstens eines Gegenstandes in der Waschmaschinenkammer, wobei das Zug- oder Treiborgan durch wenigstens eine durch eines der Tore abzuschließende Öffnung der Waschmaschinenkammer verläuft, und mit einer Dichtungseinrichtung zum Abdichten des Tores gegenüber dem Zug- oder Treiborgan.

Bekannte Industriewaschmaschinen dieser Art werden zur Reinigung von Werkstücken, beispielsweise von Rohren oder Karosserieanbauteilen, eingesetzt. Sie weisen in der Regel mehrere in Förderrichtung hintereinander angeordnete Waschmaschinenkammern auf, in denen die Werkstücke unterschiedlichen Behandlungen ausgesetzt werden. Beispielsweise werden die Werkstücke in einer ersten Waschmaschinenkammer mit einem Entfettungsmittel besprüht, in einer zweiten Waschmaschinenkammer tropft dieses von den Werkstücken ab, in einer dritten Waschmaschinenkammer werden die Werkstücke in einem ersten Spülgang gespült, in einer vierten Waschmaschinenkammer in einem zweiten Spülgang zusätzlich mit einem Spülmittel gespült und in einer fünften Waschmaschinenkammer passiviert. Hierbei werden die Werkstücke vorzugsweise automatisch mit einer durchlaufenden Fördertechnik, beispielsweise mit einer Förderkette, von Waschmaschinenkammer zu Waschmaschinenkammer befördert. Die Förderkette wird dabei taktweise im Anschluss an einen jeweiligen Bearbeitungsvorgang in Förderrichtung bewegt. Um zu verhindern, dass Reinigungsflüssigkeit, insbesondere Entfettungsflüssigkeit, beziehungsweise Spülflüssigkeit in eine benachbarte Waschmaschinenkammer gelangt, befinden sich zwischen jeweils zwei benachbarten Waschmaschinenkammern Tore, insbesondere Doppelwandhubtore, die jeweils nur während eines Fördertaktes geöffnet werden und ansonsten während eines Behandlungsvorgangs geschlossen sind. Bei den bekannten Industriewaschmaschinen werden die Tore zusätzlich mit Bürstendichtungen, Spritzschutzelementen und/oder Labyrinthdichtungen abgedichtet.

Da die Förderkette durch alle Waschmaschinenkammern hindurch verläuft, müssen in den Toren entsprechende Durchbrüche vorgesehen sein. Über diese Durchbrüche kann allerdings auch bei geschlossenen Toren Behandlungsflüssigkeit in eine benachbarte Waschmaschinenkammer eindringen.

Eine aus der DE 42 44 693 C2 bekannte Industriewaschmaschine gemäß dem Oberbegriff des Anspruchs 1 löst das Problem der Verschleppung von Behandlungsflüssigkeit dadurch, dass auf ein die gesamte Waschmaschine durchdringendes Fördersystem für die zu behandelnden Gegenstände verzichtet wird. Dadurch können die Tore zwischen den einzelnen Waschmaschinenkammern ohne jeden Durchbruch für ein Fördermittel ausgebildet sein.

Bei einer aus der DE 197 39 326 C1 bekannten Behandlungsvorrichtung mit mehreren Behandlungskammern sind auf einem langgestreckten Treiborgan die zu behandelnden Gegenstände im Wechsel mit Toren angeordnet. Bei taktweisem Betrieb kommt stets ein Tor in eine entsprechende Öffnung zwischen den Kammern zu stehen, wodurch eine gewisse Abdichtung erzielt wird.

Aufgabe der vorliegenden Erfindung ist, eine Industriewaschmaschine der eingangs genannten Art so auszugestalten, dass auch bei durchlaufender Fördertechnik die Waschmaschinenkammer nach außen hin, insbesondere gegenüber benachbarten Waschmaschinenkammern, abgedichtet ist und ein Flüssigkeitsaustritt weitgehend ausgeschlossen ist.

Diese Aufgabe wird gemäß Anspruch 1 durch eine Industriewaschmaschine gelöst in welcher, das Tor wenigstens ein Tordichtungselement und das Zug- oder Treiborgan eine Mehrzahl von mit dem Tordichtungselement zusammenwirkenden Zug- oder Treiborgandichtungselementen aufweisen, wobei der Abstand zwischen den zwei in Förderrichtung folgenden Toren ein ganzzahliges Vielfaches des Abstandes zwischen in Förderrichtung aufeinanderfolgenden Zug- oder Treiborgandichtungselementen ist.

Erfindungsgemäß ist also am Tor ein Tordichtungselement befestigt. Diesem ist je nach Position des Zug- oder Treiborgans relativ zum Tor in der Schließstellung immer eines der Zug- oder Treiborgandichtungselemente zugeordnet. Bei jedem Fördertakt wird dem Tor ein jeweils nachfolgendes Zug- oder Treiborgandichtungselement zugeordnet. Mit dem Tordichtungselement und dem jeweiligen Zug- oder Treiborgandichtungselement wird der Bereich zwischen dem Tor und dem Zug- oder Treiborgan bei geschlossenem Tor abgedichtet, ohne dass das Zug- oder Treiborgan aus diesem Bereich entfernt werden muß. Dadurch, dass die Dichtungselemente lediglich während eines Behandlungsvorgangs, also wenn das Tor geschlossen ist und das Zug- oder Treiborgan nicht bewegt wird, zusammenwirken, wird der Verschleiß der Dichtungselemente deutlich reduziert.

Bei einer vorteilhaften Ausführungsform trennt das Tor zwei in Förderrichtung hintereinander angeordnete Waschmaschinenkammern, in denen zeitgleich unterschiedliche Behandlungsvorgänge durchgeführt werden können, ohne dass Behandlungsflüssigkeit in die benachbarten Waschmaschinenkammer gelangt. Beispielsweise kann in einer Waschmaschinenkammer ein Reinigungsvorgang und gleichzeitig in der anderen Waschmaschinenkammer ein Abtropfvorgang erfolgen.

Besonders vorteilhaft kann das Tor ein Hubtor, insbesondere ein Doppelwandhubtor, sein. Ein Hubtor hat den Vorteil, dass es einen geringen horizontalen Raum beansprucht. Ein Doppelwandhubtor hat darüber hinaus gute schall- und/oder temperaturisolierende Eigenschaften.

Damit das Tor vollständig geschlossen werden kann, kann es wenigstens einen Durchbruch für das Zug- oder Treiborgan aufweisen, in dem das Tordichtungselement angeordnet ist. Mit dem Tordichtungselement wird der Durchbruch zum Tor hin abgedichtet.

Das Zug- oder Treiborgan kann endlos umlaufend sein. Das Zug- oder Treiborgan kann so durch alle Waschmaschinenkammern hindurch und in einem Bereich außerhalb der Waschmaschinenkammern zurückgeführt sein.

Zweckmäßigerweise kann das Zug- oder Treiborgan eine Transportkette, insbesondere eine endlos umlaufende Laschenkette, sein. Ketten haben den Vorteil, dass sie sehr robust sind, große Kräfte übertragen können und an ihnen sehr einfach Mitnahmemittel, beispielsweise Trägerelemente oder Haken, für die zu befördernden Gegenstände befestigt werden können. Laschenketten haben darüber hinaus den Vorteil, dass sie leicht umlenkbar und über Zahnräder antreibbar sind.

Bei einer weiteren vorteilhaften Ausführungsform kann das Tordichtungselement quaderförmig sein mit einer einen trapezförmigen Querschnitt aufweisenden Aufnahme für wenigstens eines der Zug- oder Treiborgandichtungselemente. Ein quaderförmiges Tordichtungselement ist einfach herstellbar und kann leicht in einen im Querschnitt rechteckigen, insbesondere quadratischen, Durchbruch im Tor eingebracht werden. Die trapezförmige Aufnahme bildet beim Herablassen des Tores eine Führung für das entsprechende Zug- oder Treiborgandichtungselement.

Bei Verwendung eines Doppelwandhubtores kann ein sich über beide Hubtorwände des Doppelwandhubtores erstreckendes Tordichtungselement oder für jede Hubtorwand ein separates Tordichtungselement am Doppelwandhubtor befestigt sein und an dem Zug- oder Treiborgan können paarweise den Hubtorwänden entsprechende Zug- oder Treiborgandichtungselemente oder sich über beide Hubtorwände erstreckende einzelne Zug- oder Treiborgandichtungselemente befestigt sein. Auf diese Weise sind die Durchbrüche beider Hubtorwände des Doppelwandhubtores abdichtbar. Die Doppelwand hat außerdem den Vorteil, dass etwaige aus den durch das Doppelwandhubtor getrennten Waschmaschinenkammern im Bereich der Dichtungselemente der Hubtorwände durchsickernde insbesondere unterschiedliche Behandlungsflüssigkeiten über zwei getrennte Drainagen, die jeweils einer Hubtorwand beziehungsweise den Dichtungselementen zugeordnet sind, dem jeweiligen Flüssigkeitssystem, insbesondere Flüssigkeitskreislauf, der Waschmaschinenkammern rückgeführt werden können.

Damit nach jedem Fördertakt wenigstens ein Zug- oder Treiborgandichtungselement an einem Hubtor positioniert ist, können die Zug- oder Treiborgandichtungselemente beziehungsweise Anordnungen von Zug- oder Treiborgandichtungselementen in einem Taktabstand des Zug- oder Treiborgans beim Befördern des Gegenstandes angeordnet sein.

Zweckmäßigerweise können die Zug- oder Treiborgandichtungselemente beziehungsweise Anordnungen von Zug- oder Treiborgandichtungselementen im Abstand von zwei in Förderrichtung des Gegenstandes hintereinander angeordneten Toren der Waschmaschinenkammer angeordnet sein. Nach einem Vortrieb des Zug- oder Treiborgans über die gesamte Länge der Waschmaschinenkammer, beispielsweise beim Herausbefördern des Gegenstandes aus der Waschmaschinenkammer in die nachfolgende Waschmaschinenkammer, ist somit an jedem Tor wenigstens ein Zug- oder Treiborgandichtungselement positioniert.

Um eine Verschiebung des Zug- oder Treiborgans senkrecht zur Förderrichtung zu verhindern, kann ein Führungsmittel, insbesondere einen Führungssteg, für das Zug- oder Treiborgan vorgesehen sein.

Zweckmäßigerweise kann das Führungsmittel ein Führungsdichtungselement mitbilden, welches mit dem entsprechenden Zug- oder Treiborgandichtungselement und/oder dem entsprechenden Tordichtungselement zusammenwirkt. Auf diese Weise stellt beispielsweise eine Kettenführung ein zusätzliches Dichtungselement dar; sie dichtet sowohl in Zusammenwirkung mit den Zug- oder Treiborgandichtungselementen als auch mit den Tordichtungselementen.

Wenigstens ein Oberflächenbereich wenigstens eines der zusammenwirkenden Dichtungselemente kann aus weichem Material, insbesondere einem Elastomer, sein. Dies hat den Vorteil, dass sich die Dichtungselemente leicht aneinander anpassen können, wodurch die Dichtwirkung deutlich erhöht wird.

Um die Waschmaschinenkammer nahezu hermetisch abzudichten, können zusammenwirkende Dichtungselemente spaltfrei aneinander anliegen.

Alternativ können durch die Dichtungselemente Labyrinthdichtungen mit gebildet sein, so dass auch harte Dichtungselemente eingesetzt werden können.

Die Labyrinthdichtungen können mit Drainagen ausgebildet sein, über die Flüssigkeit aus den Spalten heraus befördert werden kann. Sie können aber auch technisch einfach ohne Drainagen ausgebildet sein.

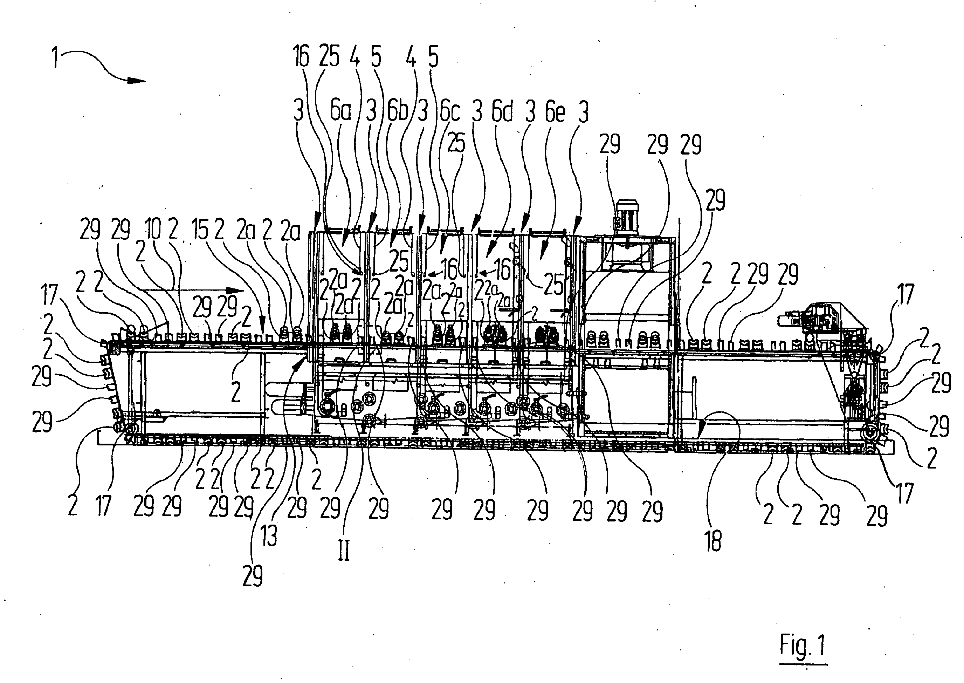

Ein Ausführungsbeispiel der Erfindung wird nachfolgend anhand der Zeichnung näher erläutert; es zeigen
- Figur 1: schematisch einen vertikalen Längsschnitt einer Industriewaschmaschine für Werkstücke mit fünf in Förderrichtung hintereinander angeordneten Waschmaschinenkammern, die jeweils paarweise durch ein hier geöffnetes Doppelwandhubtor von- einander trennbar sind und mit einer endlos um- laufenden Transportkette zum Befördern der Werkstücke;

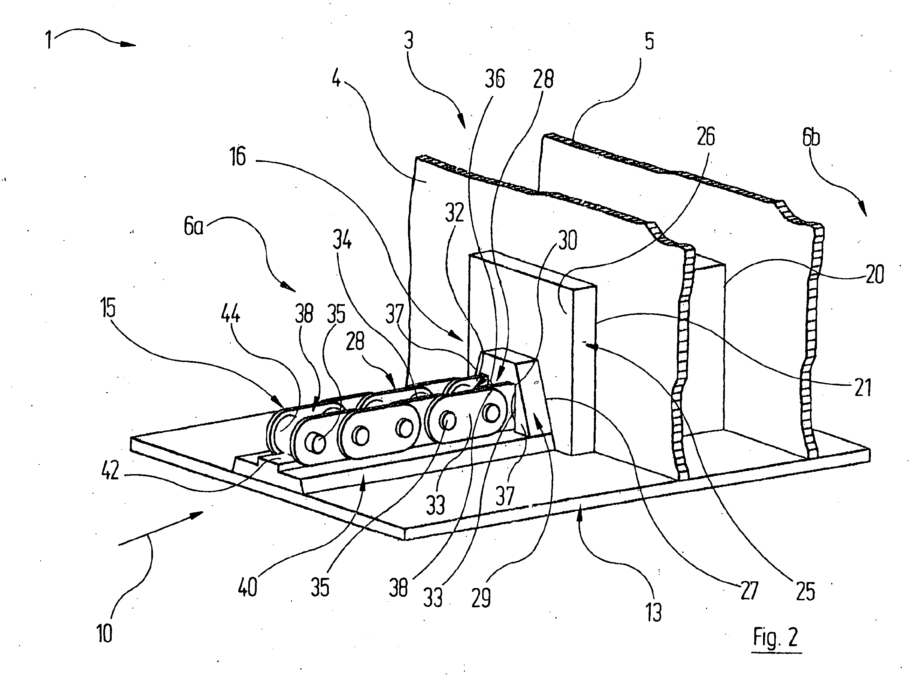

- Figur 2: schematisch eine perspektivische Detaildarstel- lung des hier herabgelassenen zweiten Doppel- wandhubtores von links der Industriewaschmaschi- ne gemäß Figur 1 im dortigen Bereich II eines Durchbruchs für die Transportkette, der mit ei- ner Dichtungseinrichtung abgedichtet ist.

In Figur 1 ist eine insgesamt mit dem Bezugszeichen 1 versehene Industriewaschmaschine für auf Trägerelementen 2 angeordnete Werkstücke 2a im vertikalen Längsschnitt dargestellt.

Die Industriewaschmaschine 1 weist in einer Förderrichtung 10 in Figur 1 von links nach rechts fünf Waschmaschinenkammern 6a, 6b, 6c, 6d, 6e auf. In der ersten Waschmaschinenkammer 6a werden die dortigen Werkstücke 2a in bekannter Weise mit einem Entfettungsmittel besprüht, in der zweiten Waschmaschinenkammer 6b tropft das Entfettungsmittel ab. In der dritten Waschmaschinenkammern 6c werden die Werkstücke 2a in einem ersten Spülgang gespült und in der vierten Waschmaschinenkammer 6d werden sie in einem zweiten Spülgang zusätzlich mit Spülmittel gespült. In der fünften Waschmaschinenkammer 6e werden zum Abschluss Rückstände von Spül- und Reinigungsmitteln aus den Behandlungen in den vorigen Waschmaschinenkammern 6a, 6c, 6d passiviert. Die einzelnen Waschmaschinenkammern 6a, 6b, 6c, 6d, 6e sind senkrecht zur Förderrichtung (Pfeil 10) durch heb- und senkbare Doppelwandhubtore 3 begrenzt, die alle im Wesentlichen identisch aufgebaut sind.

Mit den Doppelwandhubtoren 3 sind die Waschmaschinenkammern 6a, 6b, 6c, 6d, 6e jeweils abschließbar, so dass keine Entfettungs- oder Spülflüssigkeit aus ihnen austreten und gegebenenfalls in eine benachbarte eindringen kann. In Figur 1 sind die Doppelwandhubtore 3 in ihren oberen Stellungen geöffnet gezeigt.

Die Waschmaschinenkammern 6a, 6b, 6c, 6d, 6e sind in ihrer räumlichen Ausdehnung, insbesondere in ihrer Länge in Förderrichtung 10, im Wesentlichen identisch, so dass nachfolgend das anhand des in Figur 2 im Detail geschlossen dargestellten Doppelwandhubtores 3 erläuterte Prinzip der Erfindung im Wesentlichen stellvertretend für alle anderen Doppelwandhubtore 3 gilt.

Das in Figur 2 dargestellte Doppelwandhubtor 3 trennt die erste Waschmaschinenkammer 6a von der zweiten Waschmaschinenkammer 6b. Es umfasst eine erste, in der Figur 2 linke Hubtorwand 4 und eine zweite, zur rechten parallel verlaufende und in Figur 2 rechts angeordnete Hubtorwand 5.

Entlang eines gemeinsamen Waschmaschinenbodens 13 verläuft in Förderrichtung 10 eine endlos umlaufende langgestreckte Laschenkette 15 durch alle Waschmaschinenkammern 6a, 6b, 6c, 6d, 6e hindurch.

Auf der Laschenkette 15 sind in regelmäßigen Abständen jeweils paarweise die Trägerelemente 2 für die Werkstücke 2a angeordnet. Die Abstände der Paare von Trägerelementen 2 entsprechen der Länge der Waschmaschinenkammern 6a, 6b, 6c, 6d, 6e in Förderrichtung 10.

Mit der Laschenkette 15 können die Werkstücke 2a in Förderrichtung 10 bei geöffneten Doppelwandhubtoren 3 in die erste Waschmaschinenkammer 6a hinein, und dort nach Schließen wenigstens der dortigen Doppelwandhubtore 3 im Stillstand der Laschenkette 15 mit Entfettungsmittel behandelt werden. Danach werden alle Doppelwandhubtore 3 angehoben und die Gegenstände 2a werden mit der Laschenkette 15 in die zweite Waschmaschinenkammer 6b befördert und tropfen dort ab. Von dort aus können sie bei weiteren Fördertakten schrittweise in die nachfolgenden Waschmaschinenkammern 6c, 6d, 6e befördert und in diesen behandelt werden.

Die Laschenkette 15 verläuft durch die mit den Doppelwandhubtoren 3 abzuschließenden Öffnungen der Waschmaschinenkammern 6a, 6b, 6c, 6d, 6e hindurch. Die Doppelwandhubtore 3 sind in Schließstellung gegenüber der Laschenkette 15 jeweils mit einer Dichtungseinrichtung 16 abgedichtet, so dass keine Entfettungs- oder Spülflüssigkeit in die jeweils nachfolgende Waschmaschinenkammer 6b, 6c, 6d, 6e gelangt.

Die Laschenkette 15 wird mit jeweils paarweise angeordneten, lediglich in Figur 1 dargestellten, Umlenkrollen 17 in Förderrichtung 10 betrachtet vor der ersten Waschmaschinenkammer 6a und hinter der fünften Waschmaschinenkammer 6e in bekannter Weise nach unten in einen Rücklaufbereich 18 unterhalb des Waschmaschinenbodens 13 umgelenkt. Sie wird mit einem bekannten Antriebsmittel angetrieben und läuft dort entgegen der Förderrichtung 10 zurück.

Die Hubtorwände 4, 5 der Doppelwandhubtore 3 weisen an ihren Unterseiten, in Figur 2 sichtbar, jeweils einen quadratischen, nach unten in Richtung der Laschenkette 15 offenen Durchbruch 20, 21 auf. Die Durchbrüche 20, 21 sind in Förderrichtung 10 betrachtet deckungsgleich hintereinander angeordnet. Durch sie führt die Laschenkette 15 bei geschlossenem Doppelwandhubtor 3 mittig hindurch.

In den Durchbrüchen 20, 21 ist ein quaderförmiges Tordichtungselement 25 angeordnet. Das Tordichtungselement 25 erstreckt sich in Förderrichtung 10 bei dem in Figur 2 dargestellten Doppelwandhubtor 3 von der der ersten Waschmaschinenkammer 6 zugewandten Oberfläche der ersten Hubtorwand 4 zu der der zweiten Waschmaschinenkammer 6b zugewandten Oberfläche der zweiten Hubtorwand 5. Seine jeweiligen Stirnseiten ragen jeweils etwas über die jeweiligen Oberflächen der Hubtorwände 4, 5 hinaus.

Das Tordichtungselement 25 weist in seiner in Figur 2 unteren, der Laschenkette 15 zugewandten Seite durchgängig zwischen seinen beiden Stirnflächen 26 eine nach unten offene Kettendichtungsaufnahme 27 auf.

Die Kettendichtungsaufnahme 27 hat in Förderrichtung 10 betrachtet einen konstanten trapezförmigen Querschnitt, wobei ihre lange, nach unten offene Grundseite entlang der in Figur 2 unteren Seite des Tordichtungselementes 25 und ihre kurze Grundseite etwa in Höhe von dessen Mitte verläuft.

In der Kettendichtungsaufnahme 27 ist bei geschlossenem Doppelwandhubtor 3 ein Paar von identischen zu der Kettendichtungsaufnahme 27 komplementären Kettendichtungselementen 29 angeordnet. Die Kettendichtungselemente 29 sind im Abstand der beiden Hubtorwände 4, 5 jeweils oben auf der Laschenkette 15 befestigt. In Figur 2 ist lediglich das linke, der ersten Hubtorwand 4 entsprechende Kettendichtungselement 29 des Paares sichtbar.

Die Kettendichtungselemente 29 wirken mit dem Tordichtungselement 25 zusammen und dichten den Bereich zwischen dem Doppelwandhubtor 3 und der Laschenkette 15 ab.

Auf der Laschenkette 15 ist eine Mehrzahl von solchen, in Figur 1 dargestellten Paaren von Kettendichtungselementen 29 jeweils im Wechsel mit einem Paar von Trägerelementen 2 für Werkstücke 2a angeordnet. Der Abstand zwischen zwei benachbarten Paaren entspricht dem Taktabstand der Laschenkette 15, also der Strecke, die die Laschenkette 15 bei einem Fördertakt in Förderrichtung 10 zurücklegt. Im vorliegenden Beispiel entspricht der Taktabstand den Längen der Waschmaschinenkammern 6a, 6b, 6c, 6d, 6e. Auf diese Weise ist jedem in Figur 1 dargestellten Doppelwandhubtor 3 in der Schließstellung immer ein Paar von Kettendichtungselementen 29 zugeordnet.

Die Kettendichtungselemente 29 sind gerade, vierseitige Prismen mit einer trapezförmigen, dem Querschnitt der Kettendichtungsaufnahme 27 entsprechenden Grundfläche.

Die Stirnflächen der Kettendichtungselemente 29 verlaufen parallel zu den Stirnflächen 26 der Tordichtungselemente 25. Die breiten, in Figur 2 unteren horizontalen, der Laschenkette 15 zugewandten Seitenflächen der Kettendichtungselemente 29 befinden sich im offenen, unteren Bereich der Kettendichtungsaufnahme 27. Die drei anderen Flächen liegen jeweils eng an den entsprechenden Innenflächen der Kettendichtungsaufnahme 27 an. Die jeweils einander zugewandten Flächen der Kettendichtungselemente 29 und das Tordichtungselement 25 sind aus einem Elastomer.

In den in Figur 2 unteren, der Laschenkette 15 zugewandten Seiten der Kettendichtungselemente 29 befinden sich zwei parallele, vertikal verlaufende, nach unten offene Laschenschlitze 30. Die Laschenschlitze 30 dienen jeweils zur Aufnahme wenigstens eines Teils einer inneren Lasche 32 und einer äußeren Lasche 33 des entsprechenden Kettengliedes 28 der Laschenkette 15.

In einem Innenbereich 36 zwischen den beiden Laschenschlitzen 30 schließt die Unterseite des Kettendichtungselementes 29 auf Höhe der unteren Bereiche der Außenmantelflächen von Buchsen 34, die jeweils einen Bolzen 35 des Kettengliedes 28 umgeben, ab. Die Unterseite des Innenbereichs 36 ist also relativ zu den Unterseiten der seitlichen, in Figur 2 vor beziehungsweise hinter den Laschenschlitzen 30 und der jeweiligen Lasche 32, 33 verlaufenden, Außenbereichen 37 des Kettendichtungselementes 29 nach oben versetzt.

Ferner sind im Innenbereich 36 zwei in Figur 2 nicht sichtbare Aufnahmen für die beiden benachbarten Bolzen 35, vorgesehen. Da die entsprechenden Bolzen in Figur 2 nicht sichtbar sind, die Kettenglieder 28 der Laschenkette 15 ansonsten aber identisch sind, sind die entsprechenden Bezugszeichen hier und im Weiteren an einem benachbarten Kettenglied 28 angebracht.

Die Innenbereiche 37 der Kettendichtungselemente 29 sind fest in den jeweiligen Zwischenraum 38 zwischen den benachbarten Bolzen 35 und den entsprechenden Laschen 32, 33 des Kettengliedes 28 eingesteckt. Die Außenbereiche 37 des Kettendichtungselementes 29 befinden sich dabei in Förderrichtung 10 betrachtet beidseitig der Laschenkette 15 außerhalb des durch die Laschen 32, 33 begrenzten Zwischenraums 38. Die Form der Kettendichtungselemente 29 ist an die Form der Kettenglieder 28 der Laschenkette 15 angepaßt, so dass die Kettendichtungselemente 29 die entsprechenden Kettenglieder 28 lückenlos umschließen.

Die Kettendichtungselemente 29 schränken die Bewegungsfreiheit des Kettengliedes 28 zu dem benachbarten Kettengliedern 28 nicht ein, so dass die Umlenkung der Laschenkette 15 an den Umlenkrollen 17 durch die Kettendichtungselemente 29 nicht beeinträchtigt wird.

Auf dem Waschmaschinenboden 13 in Figur 2 oben ist unterhalb der Laschenkette 15 eine Kettenführung 40 angebracht.

Die Kettenführung 40 führt in Förderrichtung 10 durch alle Waschmaschinenkammern 6a, 6b, 6c, 6d, 6e hindurch.

Sie weist über ihre gesamte Länge einen konstanten, in der Grundform ebenfalls trapezförmigen Querschnitt auf. Die Länge ihrer im Querschnitt langen Grundseite entspricht der Breite der Grundseite der Kettendichtungsaufnahme 27. Die Länge ihrer kurzen Grundseite entspricht der Länge der im Querschnitt langen Grundseiten der Kettendichtungselemente 29.

Die Konturen der in Figur 2 vorderen beziehungsweise hinteren, im Querschnitt den Schenkeln des Trapezes entsprechenden Seitenflächen der Kettenführung 40 gehen stufenlos in die Konturen der entsprechenden Seitenflächen der Kettendichtungselemente 29 über. Die Seitenflächen der Kettenführung 40 sind aus einem Elastomer. Sie wirken mit den Kettendichtungselementen 29 und dem Tordichtungselement 25 dichtend zusammen.

Darüber hinaus weist die Kettenführung 40 über ihre gesamte Länge auf ihrer der Laschenkette 15 zugewandten Oberseite mittig einen Innenführungssteg 42 mit einem über seine Länge konstanten rechteckigen Querschnitt auf.

Die Höhe des Innenführungsstegs 42 entspricht dem Abstand zwischen den in Figur 2 unteren Rändern der Laschen 30, 32 und den unteren Bereichen der Außenmantelflächen der entsprechenden Buchsen 34 der Bolzen 35. Die aus einem Elastomer gebildete Oberseite des Innenführungsstegs 42 liegt daher an der Unterseite des ebenfalls aus einem Elastomer bestehenden Innenbereichs 36 des Kettendichtungselementes 29 eng an.

Die Breite des Innenführungsstegs 42 entspricht dem Abstand der jeweils einander zugewandten Innenflächen der inneren Laschen 32.

Bei einem Vorschub der Laschenkette 15 in Förderrichtung 10 gleiten die Laschen 30, 32 auf der oberen horizontalen Fläche der Kettenführung 40 und werden links und rechts des Innenführungsstegs 42 an dessen vertikalen Seitenflächen geführt.

Um die neu zuzuführenden Werkstücke 2a in die erste Waschmaschinenkammer 6a, die dortigen Werkstücke 2a von dieser in die zweite Waschmaschinenkammer 6b und so weiter zu befördern, werden zunächst alle Doppelwandhubtore 3 nach oben bewegt und damit geöffnet. Hierbei verbleiben die Tordichtungselemente 25 in den jeweiligen Durchbrüchen 20, 21 und die Kettendichtungselemente 29 auf der Laschenkette 15.

Die Laschenkette 15 wird zunächst bei einem Fördertakt in Förderrichtung 10 um die Länge der Waschmaschinenkammern 6a, 6b ,6c, 6d, 6e in Figuren 1, 2 nach rechts bewegt, so dass die Werkstücke 2a aus der ersten Waschmaschinenkammer 6a an die gewünschte Position in der zweiten Waschmaschinenkammer 6b befördert werden. Gleichzeitig werden die Werkstück 2a aus der fünften Waschmaschinenkammer 6e in Figur 1 rechts aus dieser heraus und die neuen Werkstücke 2a in Figuren 1, 2 von links in die erste Waschmaschinenkammer 6a hinein befördert.

Im Bereich unterhalb der Doppelwandhubtore 3 befinden sich nun die in Förderrichtung 10 jeweils nachfolgenden Paare von Kettendichtungselementen 29, die zuletzt den jeweils davorliegenden Doppelwandhubtoren 3 zuordnet waren.

Nun werden die Doppelwandhubtore 3 wieder gesenkt, wobei sich die Kettendichtungsaufnahmen 27 von oben jeweils über die neu zugeordneten Paare von Kettendichtungselementen 29 schieben und mit diesen den jeweiligen Bereich zwischen der Laschenkette 15 und dem entsprechenden Doppelwandhubtor 3 abdichten.

Die neuen Werkstücke 2a können jetzt in der ersten Waschmaschinenkammern 6a mit Entfettungsflüssigkeit besprüht werden, während die zuvor dort besprühten Werkstücke 2a gleichzeitig in den sich anschließenden Waschmaschinenkammern 6b, 6c, 6d, 6e entsprechend behandelt werden, ohne dass Entfettungs- oder Spülflüssigkeit in eine benachbarte Waschmaschinenkammer 6a, 6b, 6c, 6d, 6e gelangt.

Das Verfahren wird taktweise wiederholt.

Die Industriewaschmaschine kann auch nur eine Waschmaschinenkammer oder mehr als fünf Waschmaschinenkammern aufweisen.

Es können auch andersartige Tore statt der Doppelwandhubtore 3 oder auch einfache Hubtore verwendet werden.

Statt der Laschenkette 15 kann auch ein anderes langgestrecktes Zug- oder Treiborgan, beispielsweise ein Seil, ein Transportband oder eine Schubstange, vorgesehen sein.

In den Toren können auch mehrere Durchbrüche, beispielsweise für einen rücklaufenden Strang des Zug- oder Treiborgans, vorgesehen sein.

Das Zug- oder Treiborgan kann statt endlos umlaufend auch offen sein und beispielsweise nach jedem Fördertakt entgegen der Förderrichtung 10 zurück bewegt werden.

Die Tordichtungselemente können auch eine andere als eine Quaderform aufweisen. Die Aufnahmen können statt eines trapezförmigen beispielsweise auch einen dreieckigen oder runden oder völlig anderen, insbesondere sich nach oben verjüngenden Querschnitt, haben.

Statt im Abstand von zwei in Förderrichtung betrachtet hintereinander angeordneten Doppelwandhubtoren der Waschmaschinenkammern können die Kettendichtungselemente auch in einem kleineren Taktabstand auf der Laschenkette angeordnet sein. Beispielsweise sind dann in einem Bereich zwischen den Toren in regelmäßigen, der jeweiligen Förderstrecke bei einem Fördertakt entsprechenden Abständen noch weitere Kettendichtungselemente angeordnet.

Statt der beschriebenen Kettenführung 40 kann auch ein andersartiges, langgestrecktes Führungsmittel eingesetzt werden.

Das Führungsmittel 40, 42 kann auch nur mit dem Zug- oder Treiborgandichtungselement oder dem Tordichtungselement dichtend zusammenwirken.

Es kann auch nur eine Oberfläche der zusammenwirkenden Dichtungselemente aus Elastomer sein. Die Dichtungselemente können auch vollständig aus Elastomer sein. Statt Elastomeren können auch andersartige, weiche, von den Behandlungsflüssigkeiten nicht angreifbare, nicht poröse, nicht flüssigkeitsaufsaugende (schwammartige) Materialien verwendet werden.

Die Dichtungselemente können auch Labyrinthdichtungen sein.

Die Dichtungselemente können mit oder ohne Drainagen zum Abführen von Flüssigkeit ausgebildet sein.

Mit diesen und in anderen Bereichen des Doppelwandhubtores 3 angeordneten Drainagen können die insbesondere unterschiedlichen Behandlungsflüssigkeiten, die aus benachbarten Waschmaschinenkammern im Bereich der entsprechenden Dichtungselemente 25, 29, 40, 42 insbesondere in den Bereich zwischen den Hubtorwänden 4 und 5 des Doppelwandhubtores 3 durchsickern, getrennt einem jeweiligen Flüssigkeitssystem, insbesondere der jeweiligen Waschmaschinenkammer, wieder zugeführt werden. Es können Drainagen unterhalb der Hubtorwände 4 und 5, beispielsweise mit jeweils einer getrennten Sammeleinrichtung und/oder direkt mit den Dichtungselementen verbunden sein.

## Patentansprüche

1. Industriewaschmaschine mit wenigstens einer Waschmaschinenkammer (6a, 6b, 6c, 6d, 6e), wenigstens zwei Toren (3) zum Abschluss der Waschmaschinenkammer (6a, 6b, 6c, 6d, 6e), wenigstens einem langgestreckten Zug- oder Treiborgan (15) zum taktweise Fördern wenigstens eines Gegenstandes (2a) in der Waschmaschinenkammer (6a, 6b, 6c, 6d, 6e), wobei das Zug- oder Treiborgan (15) durch wenigstens eine durch eines der Tore (3) abzuschließende Öffnung der Waschmaschinenkammer (6a, 6b, 6c, 6d, 6e) verläuft, und mit einer Dichtungseinrichtung (16) zum Abdichten des Tores (3) gegenüber dem Zug- oder Treiborgan (15),
**dadurch gekennzeichnet, dass**
das Tor (3) wenigstens ein Tordichtungselement (25) und das Zug- oder Treiborgan (15) eine Mehrzahl von mit dem Tordichtungselement (25) zusammenwirkenden Zug- oder Treiborgandichtungselementen (29) aufweisen, wobei der Abstand zwischen den zwei in Förderrichtung (10) folgenden Toren (3) ein ganzzahliges Vielfaches des Abstandes zwischen in Förderrichtung (10) aufeinanderfolgenden Zug- oder Treiborgandichtungselementen (29) ist.

2. Industriewaschmaschine nach Anspruch 1, **dadurch gekennzeichnet, dass** das Tor (3) zwei in Förderrichtung (10) hintereinander angeordnete Waschmaschinenkammern (6a, 6b, 6c, 6d, 6e) trennt.

3. Industriewaschmaschine nach Anspruch 1 oder 2, **dadurch gekennzeichnet, dass** das Tor ein Hubtor, insbesondere ein Doppelwandhubtor (3), ist.

4. Industriewaschmaschine nach einem der vorhergehenden Ansprüche, **dadurch gekennzeichnet, dass** das Tor (3) wenigstens einen Durchbruch (20, 21) für das Zug- oder Treiborgan (15) aufweist, in dem das Tordichtungselement (25) angeordnet ist.

5. Industriewaschmaschine nach einem der vorhergehenden Ansprüche, **dadurch gekennzeichnet, dass** das Zug- oder Treiborgan (15) endlos umlaufend ist.

6. Industriewaschmaschine nach einem der vorhergehenden Ansprüche, **dadurch gekennzeichnet, dass** das Zug- oder Treiborgan eine Transportkette, insbesondere eine endlos umlaufende Laschenkette (15), ist.

7. Industriewaschmaschine nach einem der vorhergehenden Ansprüche, **dadurch gekennzeichnet, dass** das Tordichtungselement (25) quaderförmig ist mit einer einen trapezförmigen Querschnitt aufweisenden Aufnahme (27) für wenigstens eines der Zug- oder Treiborgandichtungselemente (29).

8. Industriewaschmaschine nach einem der vorhergehenden Ansprüche, **dadurch gekennzeichnet, dass** ein sich über beide Hubtorwände (4, 5) eines Doppelwandhubtores (3) erstreckendes Tordichtungselement (25) oder für jede Hubtorwand (4, 5) ein separates Tordichtungselement am Doppelwandhubtor (3) befestigt ist und an dem Zug- oder Treiborgan (15) paarweise den Hubtorwänden (4, 5) entsprechende Zug- oder Treiborgandichtungselemente (29) oder sich über beide Hubtorwände erstreckende einzelne Zug- oder Treiborgandichtungselemente befestigt sind.

9. Industriewaschmaschine nach einem der vorhergehenden Ansprüche, **dadurch gekennzeichnet, dass** die Zug- oder Treiborgandichtungselemente beziehungsweise Anordnungen von Zug- oder Treiborgandichtungselementen (29) in einem Taktabstand des Zug- oder Treiborgans (15) beim Befördern des Gegenstandes (2a) angeordnet sind.

10. Industriewaschmaschine nach einem der vorhergehenden Ansprüche, **dadurch gekennzeichnet, dass** die Zug- oder Treiborgandichtungselemente beziehungsweise Anordnungen von Zug- oder Treiborgandichtungselementen (29) im Abstand von zwei in Förderrichtung (10) des Gegenstandes (2a) hintereinander angeordneten Toren (3) der Waschmaschinenkammer (6a, 6b, 6c, 6d, 6e) angeordnet sind.

11. Industriewaschmaschine nach einem der vorhergehenden Ansprüche, **gekennzeichnet durch** ein Führungsmittel (40, 42), insbesondere einen Führungssteg (42), für das Zug- oder Treiborgan (15).

12. Industriewaschmaschine nach Anspruch 11, **dadurch gekennzeichnet, dass** das Führungsmittel (40, 42) ein Führungsdichtungselement mitbildet, welches mit dem entsprechenden Zug- oder Treiborgandichtungselement (29) und/oder dem entsprechenden Tordichtungselement (25) zusammenwirkt.

13. Industriewaschmaschine nach einem der vorhergehenden Ansprüche, **dadurch gekennzeichnet, dass** wenigstens ein Oberflächenbereich wenigstens eines der zusammenwirkenden Dichtungselemente (25, 29, 40, 42) aus weichem Material, insbesondere Elastomer, ist.

14. Industriewaschmaschine nach einem der vorhergehenden Ansprüche, **dadurch gekennzeichnet, dass** zusammenwirkende Dichtungselemente (25, 29, 40, 42) spaltfrei aneinander anliegen.

15. Industriewaschmaschine nach einem der Ansprüche 1 bis 13, **dadurch gekennzeichnet, dass** durch die Dichtungselemente Labyrinthdichtungen mit gebildet sind.

16. Industriewaschmaschine nach Anspruch 15, **dadurch gekennzeichnet, dass** die Labyrinthdichtungen mit oder ohne Drainagen ausgebildet sind.

## Claims

1. Industrial washing machine with at least one washing machine chamber (6a, 6b, 6c, 6d, 6e), at least two doors (3) for closing the washing machine chamber (6a, 6b, 6c, 6d, 6e), at least one elongated pulling or driving organ (15) for the cyclical conveying of at least one object (2a) in the washing machine chamber (6a, 6b, 6c, 6d, 6e), wherein the pulling or driving organ (15) runs through at least one opening of the washing machine chamber (6a, 6b, 6c, 6d, 6e) to be closed by one of the doors (3), and with a sealing device (16) for sealing the door (3) in relation to the pulling or driving organ (15),
**characterized in that**
the door (3) has at least one door sealing element (25) and the pulling or driving organ (15) a plurality of pulling or driving organ sealing elements (29) interacting with the door sealing element (25), wherein the distance between the two succeeding doors (3) in the conveying direction (10) is an integral multiple of the distance between successive pulling or driving organ sealing elements (29) in the conveying direction (10).

2. Industrial washing machine according to claim 1, **characterized in that** the door (3) separates two washing machine chambers (6a, 6b, 6c, 6d, 6e) arranged behind one another in the conveying direction (10).

3. Industrial washing machine according to claim 1 or 2, **characterized in that** the door is a lifting door, in particular a double-walled lifting door (3).

4. Industrial washing machine according to one of the preceding claims, **characterized in that** the door (3) has at least one opening (20, 21) for the pulling or driving organ (15), in which opening the door sealing element (25) is arranged.

5. Industrial washing machine according to one of the preceding claims, **characterized in that** the pulling or driving organ (15) is endlessly circulating.

6. Industrial washing machine according to one of the preceding claims, **characterized in that** the pulling or driving organ is a conveyor chain, in particular an endlessly circulating plate link chain (15).

7. Industrial washing machine according to one of the preceding claims, **characterized in that** the door sealing element (25) is parallelepiped-shaped with a receptacle (27) having a trapezoidal cross-section for at least one of the pulling or driving organ sealing elements (29).

8. Industrial washing machine according to one of the preceding claims, **characterized in that** a door sealing element (25) extending over both lifting door walls (4, 5) of a double-walled lifting door (3) or for each lifting door wall (4, 5) a separate door sealing element is mounted on the double-walled lifting door (3) and mounted on the pulling or driving organ (15) are pulling or driving organ sealing elements (29) corresponding in pairs to the lifting door walls (4, 5) or individual pulling or driving organ sealing elements extending over both lifting door walls.

9. Industrial washing machine according to one of the preceding claims, **characterized in that** the pulling or driving organ sealing elements and/or arrangements of pulling or driving organ sealing elements (29) are arranged at a cycle distance of the pulling or driving organ (15) when conveying the object (2a).

10. Industrial washing machine according to one of the preceding claims, **characterized in that** the pulling or driving organ sealing elements and/or arrangements of pulling or driving organ sealing elements (29) are arranged at a distance of two doors (3) of the washing machine chambers (6a, 6b, 6c, 6d, 6e) arranged behind one another in the conveying direction (10) of the object (2a).

11. Industrial washing machine according to one of the preceding claims, **characterized by** a guide means (40, 42), in particular a guide bar (42), for the pulling or driving organ (15).

12. Industrial washing machine according to claim 11, **characterized in that** the guide means (40, 42) also forms a guide sealing element, which interacts with the corresponding pulling or driving organ sealing element (29) and/or the corresponding door sealing element (25).

13. Industrial washing machine according to one of the preceding claims, **characterized in that** at least one surface area of at least one of the interacting sealing elements (25, 29, 40, 42) is of soft material, in particular elastomer.

14. Industrial washing machine according to one of the preceding claims, **characterized in that** interacting sealing elements (25, 29, 40, 42) sit closely to one another without gaps.

15. Industrial washing machine according to one of claims 1 to 13, **characterized in that** labyrinth seals are also formed by the sealing elements.

16. Industrial washing machine according to claim 15, **characterized in that** the labyrinth seals are formed with or without drainages.

## Revendications

1. Machine à laver industrielle comprenant au moins un compartiment de lavage (6a, 6b, 6c, 6d, 6e) ; au moins deux portillons (3) conçus pour obturer ledit compartiment de lavage (6a, 6b, 6c, 6d, 6e) ; au moins un organe (15) de traction ou d'entraînement, de forme allongée, affecté au convoyage cadencé d'au moins un objet (2a) dans ledit compartiment de lavage (6a, 6b, 6c, 6d, 6e), ledit organe (15) de traction ou d'entraînement franchissant au moins une ouverture dudit compartiment de lavage (6a, 6b, 6c, 6d, 6e) devant être occultée par l'un desdits portillons (3) ; et un système d'étanchement (16) pour assurer l'étanchéité dudit portillon (3) vis-à-vis dudit organe (15) de traction ou d'entraînement,
**caractérisée par le fait que**
le portillon (3) est muni d'au moins un élément d'étanchement (25), et l'organe (15) de traction ou d'entraînement offre une pluralité d'éléments d'étanchement (29) coopérant avec ledit élément (25) d'étanchement du portillon, sachant que la distance, comprise entre les deux portillons (3) en succession dans la direction de convoyage (10), est un multiple entier de la distance séparant des éléments (29) d'étanchement de l'organe de traction ou d'entraînement qui se succèdent dans ladite direction de convoyage (10).

2. Machine à laver industrielle selon la revendication 1, **caractérisée par le fait que** le portillon (3) sépare deux compartiments de lavage (6a, 6b, 6c, 6d, 6e) situés l'un derrière l'autre dans la direction de convoyage (10).

3. Machine à laver industrielle selon la revendication 1 ou 2, **caractérisée par le fait que** le portillon est un portillon relevable, notamment un portillon relevable (3) à double paroi.

4. Machine à laver industrielle selon l'une des revendications précédentes, **caractérisée par le fait que** le portillon (3) comporte au moins une découpe (20, 21) dédiéé à l'organe (15) de traction ou d'entraînement, et dans laquelle se trouve l'élément (25) d'étanchement dudit portillon.

5. Machine à laver industrielle selon l'une des revendications précédentes, **caractérisée par le fait que** l'organe (15) de traction ou d'entraînement accomplit une révolution sans fin.

6. Machine à laver industrielle selon l'une des revendications précédentes, **caractérisée par le fait que** l'organe (15) de traction ou d'entraînement est une chaîne transporteuse, en particulier une chaîne articulée (15) à révolution sans fin.

7. Machine à laver industrielle selon l'une des revendications précédentes, **caractérisée par le fait que** l'élément (25) d'étanchement du portillon est de forme quadrangulaire et présente un logement (27) de section transversale trapézoïdale, dévolu à au moins l'un des éléments (29) d'étanchement de l'organe de traction ou d'entraînement.

8. Machine à laver industrielle selon l'une des revendications précédentes, **caractérisée par le fait qu'**un élément d'étanchement (25) couvrant l'étendue des deux parois (4, 5) d'un portillon relevable (3) à double paroi, voire, pour chaque paroi (4, 5) dudit portillon relevable, un élément d'étanchement distinct, est respectivement fixé audit portillon relevable (3) à double paroi ; et des éléments d'étanchement (29), concordant par paires avec lesdites parois (4, 5) du portillon relevable, voire des éléments d'étanchement individuels couvrant l'étendue des deux parois dudit portillon relevable, sont respectivement fixés à l'organe (15) de traction ou d'entraînement.

9. Machine à laver industrielle selon l'une des revendications précédentes, **caractérisée par le fait que** les éléments d'étanchement de l'organe de traction ou d'entraînement ou, respectivement, des ensembles d'éléments (29) d'étanchement dudit organe de traction ou d'entraînement, sont situés à distance régulière répétitive, vis-à-vis dudit organe (15) de traction ou d'entraînement, lors du convoyage de l'objet (2a).

10. Machine à laver industrielle selon l'une des revendications précédentes, **caractérisée par le fait que** les éléments d'étanchement de l'organe de traction ou d'entraînement ou, respectivement, des ensembles d'éléments (29) d'étanchement dudit organe de traction ou d'entraînement, sont espacés de la distance comprise entre deux portillons (3) du compartiment de lavage (6a, 6b, 6c, 6d, 6e) qui se trouvent l'un derrière l'autre dans la direction de convoyage (10).

11. Machine à laver industrielle selon l'une des revendications précédentes, **caractérisée par** un moyen de guidage (40, 42), notamment une nervure de guidage (42) assignée à l'organe (15) de traction ou d'entraînement.

12. Machine à laver industrielle selon la revendication 11, **caractérisée par le fait que** le moyen de guidage (40, 42) forme, conjointement, un élément d'étanchement du guidage qui coopère avec l'élément correspondant (29) d'étanchement de l'organe de traction ou d'entraînement, et/ou avec l'élément correspondant (25) d'étanchement du portillon.

13. Machine à laver industrielle selon l'une des revendications précédentes, **caractérisée par le fait qu'**au moins une région de la surface d'au moins l'un des éléments d'étanchement (25, 29, 40, 42), en coopération mutuelle, est constituée d'un matériau tendre et notamment d'un élastomère.

14. Machine à laver industrielle selon l'une des revendications précédentes, **caractérisée par le fait que** des éléments d'étanchement (25, 29, 40, 42), coopérant mutuellement, sont réciproquement en applique avec absence d'interstice.

15. Machine à laver industrielle selon l'une des revendications 1 à 13, **caractérisée par le fait que** des garnitures d'étanchement à labyrinthe sont conjointement formées par les éléments d'étanchement.

16. Machine à laver industrielle selon la revendication 15, **caractérisée par le fait que** les garnitures d'étanchement à labyrinthe sont réalisées avec ou sans systèmes de purge.
